Europäisches Patentamt

European Patent Office

Office européen des brevets

(19)

(11) Numéro de publication: **0 073 176**
**A2**

(12) # DEMANDE DE BREVET EUROPEEN

(21) Numéro de dépôt: **82810242.6**

(22) Date de dépôt: **07.06.82**

(51) Int. Cl.³: **G 01 N 31/08**

(30) Priorité: **11.08.81 CH 5176 81**

(43) Date de publication de la demande:
**02.03.83 Bulletin 83 9**

(84) Etats contractants désignés:
**AT BE CH DE FR GB IT LI LU NL SE**

(71) Demandeur: **Rektorik, Jiri**
**7, Rue Carteret**
**CH-1202 GENEVE(CH)**

(72) Inventeur: **Rektorik, Jiri**
**7, Rue Carteret**
**CH-1202 GENEVE(CH)**

(74) Mandataire: **Nithardt, Roland**
**CABINET ROLAND NITHARDT Rue Edouard Verdan 15**
**CH-1400 Yverdon(CH)**

(54) **Procédé et dispositif d'analyse par chromatographie gazeuse et application du procédé.**

(57) Une colonne de matière adsorbante (2), chargée de substances volatiles à analyser est placée dans une enceinte (1) et un matériau à faible coefficient de perte diélectrique. Dès l'enclenchement d'un générateur de micro-ondes (5), la matière adsorbante est chauffée très rapidement et les substances volatiles sont conduites dans une colonne chromatographique (3) par un gaz vecteur admis par un tube (4).

FIG. I

EP 0 073 176 A2

- 1 -

## Procédé et dispositif d'analyse par chromatographie gazeuse et application du procédé.

La présente invention concerne un procédé d'analyse par chromatographie gazeuse dans lequel on concentre l'échantillon de matière à analyser sur une trappe solide constituée par une colonne de matière adsorbante, dans lequel on chauffe la matière adsorbante qui est simultanément balayée par un courant de gaz neutre, et dans lequel on conduit ce gaz neutre chargé de substances désorbées dans une colonne chromatographique.

Elle concerne également un dispositif pour la mise en oeuvre de ce procédé.

Elle concerne enfin une application de ce procédé à l'analyse chromatographique d'au moins une matière à l'état solide et/ou liquide et/ou gazeux.

Le développement de méthodes instrumentales dans le domaine de l'analye en phase gazeuse a pris un essort considérable. La parfumerie, l'industrie alimentaire, la pétrochimie et la recherche des substances polluant l'environnement sont toutes concernées par ce type d'analyse.

Dans le processus de l'analyse, nous distinguons la collecte de l'échantillon d'une part, et son transfert dans la colonne chromatographique d'autre part. La collecte peut aller d'un simple prélèvement des substances en phase gazeuse en équilibre de pression à la concentration de l'échantillon sur un support appelé trappe solide. Cette dernière est surtout avantageuse pour l'analyse des substances en phase gazeuse de faible concentration, telles que les substances qui polluent l'environnement.

Pour transférer l'échantillon de la trappe solide dans une colonne, deux techniques principales sont actuellement utilisées:

a) l'extraction par solvant,
b) la désorption thermale.

La méthode par extraction est relativement simple. L'extrait du contenu de la trappe est tout simplement injecté par une seringue dans l'injecteur conventionnel. Ses principaux inconvénients sont:

a) la présence du solvant en grande concentration par rapport à l'échantillon
b) les interférences avec des impuretées dans le solvant-même,
c) la dilution de l'échantillon.

La technique de désorption thermale utilise un appareillage plus compliqué, et le transfert se fait en général en deux temps. La trappe est d'abord introduite dans le circuit du gaz porteur et désorbée thermalement pendant plusieurs minutes dans la deuxième trappe cryogènique. Celle-ci est à son tour rapidement rechauffée et l'échantillon passe ainsi dans la colonne.

Dans le cadre de cette technique, on utilise couramment des matières solides adsorbantes, notamment du charbon actif, pour concentrer des vapeurs ou des gaz en vue de leur analyse par chromatographie gazeuse. Pour obtenir une bonne résolution dans la colonne de chromatographie, le désorption des substances adsorbées doit être aussi rapide que possible. A cet effet, on utilise en général un dispositif dans lequel un mince tube contenant la matière adsorbante chargée est brusquement introduit dans un manchon préchauffé électriquement. La matière adsorbante chauffée est balayée par un courant d'azote et l'azote chargé de substances désorbées est conduit directement dans la colonne chromatographique. Ce dispositif permet de traiter des quantités de matière adsorbante de l'ordre de quelques milligrammes. La vitesse de désorption est limitée en raison du fait que le chauffage de la matière adsorbante se fait par conduction à travers la parois du tube qui la contient et que la température maximale du corps de chauffe est limitée par le point de ramollissement du tube contenant la matière adsorbante. En général, on utilise un tube en verre de borosilicate dont le point de ramolissement est d'environ 500° C. Berg, dans son article (Central Institute of Industrial Research P.b. 350, Blindern, Oslo 3, Norvège) décrit un procédé dans lequel on travaille à la température de 280°C, ce qui est insuffisant pour une désorption approchant 100% comme il a été démontré par Colenutt et Thorburn dans l'article cité ci-dessous.

B.A. Colenutt et S. Thorburn (Chromatographia, tome 12, No 8, août 1979, page 519) ont appliqué le principe du chauffage au point Curie pour la désorption de substances adsorbées sur du charbon actif. Cette méthode permet un chauffage très rapide jusqu'à des températures pouvant atteindre 770°C, mais les quantités de charbon actif traité sont insuffisantes pour certaines analyses. En outre, la matière désorbée est en contact avec les métaux portés à haute température et risque de subir des transformations chimiques. De surcroît, cette méthode ne garantit pas non plus un chauffage uniforme de tout adsorbant, vu que le chauffage se fait progressivement de l'extérieur à l'intérieur de l'adsorbant.

En général, en utilisant le chauffage par conduction, on risque de chauffer les pièces voisines de l'adsorbant par exemple les joints et autres parties en matières plastiques, qui peuvent à leur tour désorber des substances volatiles et interférer ainsi avec les substances à analyser.

Le but de la présente invention est de réaliser une désorption aussi rapide que la désorption par chauffage au point Curie, mais par un chauffage réparti uniformément dans tout l'adsorbant, sans chauffer d'autres matières que l'adsorbant lui-même et avec la possibilité de traiter des quantités relativement élevées de matière adsorbante en une fois.

Dans ce but, le procédé selon l'invention est caractérisé en ce que l'on chauffe la colonne adsorbante par micro-ondes, et en ce que l'on choisit une matière adsorbante refractaire ayant un coefficient de perte diélectrique suffisamment élevé pour permettre son chauffage par micro-ondes.

Le dispositif selon l'invention est caractérisé en ce que le dispositif de chauffage comporte un générateur de micro-ondes, en ce que la colonne de matière adsorbante est disposée dans le faisceau de micro-ondes engendré par le générateur, et en ce que la matière adsorbante est une matière refractaire ayant un coefficient de perte diélectrique suffisamment élevé pour permettre son chauffage par micro-ondes.

Ce principe de chauffage a déjà été appliqué au chauffage de matières diélectriques ayant adsorbé de l'humidité, afin de doser cette humidité, mais cette application est sans rapport avec l'analyse chromatographique.

La présente invention sera mieux comprise en référence à la description d'un exemple d'utilisation du procédé selon l'invention et d'une forme de réalisation du dispositif correspondant, en référence au dessin, dans lequel:

la figure 1 représente une vue schématique en coupe d'un exemple de réalisation du dispositif selon l'invention, et

la figure 2 représente un graphique illustrant les résultats de l'analyse obtenus par le procédé selon l'invention.

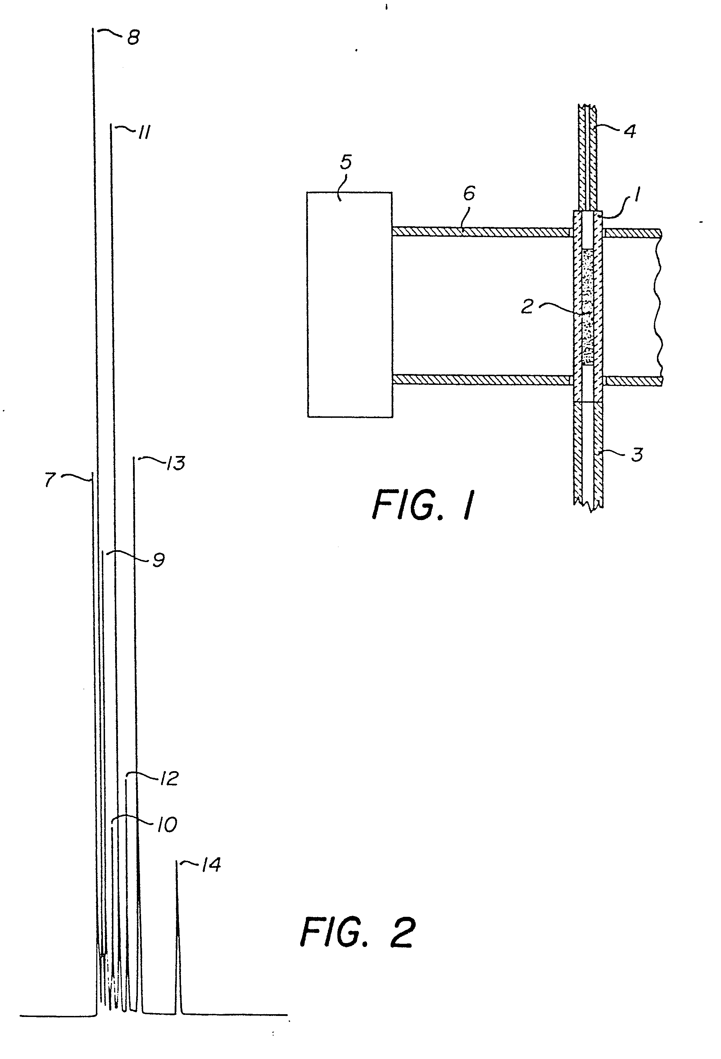

En référence à la figure 1, une enceinte 1, par exemple, mais non exclusivement tubulaire, en une matière réfractaire telle que par exemple du quartz ou une céramique non poreuse à faible coefficient de perte diélectrique, contient une matière adsorbante 2, chargée d'au moins une matière adsorbée à analyser chromatographiquement. Cette matière adsorbante possède un coefficient de perte diélectrique suffisant pour permettre son chauffage par micro-ondes dans des conditions où la matière de l'enceinte 1 ne dissipe que peu de puissance électrique. Le charbon actif s'est avéré être une matière adsorbante appropriée pour le traitement dans le dispositif selon l'invention. Toutefois d'autres matières sont utilisables, notamment un composé synthétique commercialisé sous la dénomination Tenax Ⓡ , ou la matière à analyser elle-même, ou un mélange de plusieurs de ces matières. La matière à analyser peut d'ailleurs être à l'état solide et/ou liquide et/ou gazeux.

L'enceinte peut être raccordée par son extrémité inférieure à une colonne chromatographique en phase gazeuse 3 et, par son extrémité supérieure, à un tube 4 d'admission d'un gaz de balayage, dit gaz vecteur.

Un faisceau de micro-ondes est émis par un générateur 5 et est guidé sur le tube 1 par un guide d'ondes 6.

Dès l'enclenchement du générateur 5, la température de la matière adsorbante 2 contenue dans l'enceinte 1 monte presque instantanément jusqu'à une valeur pouvant atteindre 1000°C, grâce au fait que la chaleur est produite au sein de la matière adsorbante au lieu d'être transmise par conduction et les matières désorbées sont entraînées à haute concentra-

tion par le gaz de balayage. Ainsi, les conditions optimum d'une analyse chromatographique sont réalisées, sans chauffage appréciable des divers éléments du dispositif, sans surchauffe locale de la matière adsorbante et sans qu'une partie quelconque du dispositif atteigne une température à laquelle il pourrait dégager des gaz susceptibles de polluer l'échantillon à analyser.

La figure 2 représente, à titre d'exemple, un chromatogramme illustrant le résultat de l'analyse d'un mélange de solvants. Un microlitre de mélange pur a été injecté dans un flacon d'un litre. Les vapeurs ainsi diluées ont été aspirées (débit 5ml/s) à travers la trappe de charbon actif pendant 5 s. Une désorption de 2 s a donné une très bonne réponse sur le détecteur à ionisation de flamme avec une atténuation élevée. Cette réponse est illustrée sur le chromatogramme présentant 8 pics qui correspondent respectivement: en 7 à l'anhydride carbonique, en 8 au cyclohexane, en 9 à l'acétone, en 10 au méthanol, en 11 au benzène, en 12 au n-décane, en 13 au toluène et en 14 au n-butanol.

Selon une forme de mise en oeuvre avantageuse du procédé décrit, on peut conditionner ou disposer la matière adsorbante d'une manière qui favorise l'adsorption de l'échantillon de matières à analyser, par exemple en colonne, au cours de la phase opératoire consistant à concentrer les échantillons à analyser sur la matière adsorbante. Pour la phase suivante, consistant à désorber les matières adsorbées, on peut avoir avantage à étaler par exemple en couche mince la matière adsorbante pour favoriser le désorption.

Revendications

1. Procédé d'analyse par chromatographie gazeuse, dans lequel on concentre l'échantillon de matières à analyser sur une trappe solide constituée par une colonne de matière adsorbante, dans lequel on chauffe la matière adsorbante qui est simultanément balayée par un courant de gaz neutre, et dans lequel on conduit ce gaz neutre chargé de substances désorbées dans une colonne chromatographique, caractérisé en ce que l'on chauffe la colonne adsorbante par micro-ondes, et en ce que l'on choisit une matière adsorbante réfractaire ayant un coefficient de perte diélectrique suffisamment élevé pour permettre son chauffage par micro-ondes.

2. Procédé selon la revendication 1, caractérisé en ce qu'au cours d'une première phase de l'analyse, on conditionne la matière adsorbante d'une première manière qui favorise l'adsorption de l'échantillon de matières à analyser, et en ce qu'au cours d'une seconde phase de l'analyse, on modifie la disposition de la matière adsorbante, d'une manière qui favorise la désorption des matières à analyser.

3. Dispositif pour la mise en oeuvre du procédé selon la revendication 1, comportant une colonne de matière adsorbante sur laquelle sont concentrées les matières à analyser, un dispositif pour provoquer un balayage de la colonne de matière adsorbante par un gaz vecteur, et un dispositif de chauffage de la matière adsorbante pour désorber les matières à analyser, caractérisé en ce que le dispositif de chauffage comporte un générateur de micro-ondes, en ce que la colonne de matière adsorbante est disposée dans le faisceau de micro-ondes engendré par le générateur, et en ce que la matière adsorbante est une matière refractaire ayant un coefficient de perte diélectrique suffisamment élevé pour permettre son chauffage par micro-ondes.

4. Dispositif selon la revendication 3, caractérisé en ce que la colonne de matière adsorbante est logée dans une enceinte réalisée en une matière solide ayant un coefficient de perte diélectrique suffisamment faible pour ne pas être chauffée appréciablement par le faisceau de micro-ondes.

5. Dispositif selon la revendication 4, caractérisé en ce que l'enceinte est réalisée en quartz.

6. Dispositif selon la revendication 4, caractérisé en ce que l'enceinte est réalisée en céramique non poreuse.

7. Dispositif selon la revendication 3, caractérisé en ce que la matière adsorbante comporte du charbon actif.

8. Dispositif selon la revendication 3, caractérisé en ce que la matière adsorbante est constituée au moins en partie par la matière à analyser.

9. Dispositif selon la revendication 3, caractérisé en ce que la matière adsorbante est un composé synthétique.

10. Application du procédé selon la revendication 1 à l'analyse chromatographique d'au moins une matière à l'état solide, et/ou liquide, et/ou gazeux.

FIG. 1

FIG. 2